# EUROPEAN PATENT APPLICATION

(11) **EP 4 245 688 A1**
(43) Date of publication of application: **20.09.2023**
(21) Application number: 22759414.0
(22) Date of filing: 14.02.2022
(51) Int. Cl.: B65D 83/08, A61J 1/00

(54) **PACKAGING BAG AND PATCH PACKAGING PRODUCT**

(30) Priority: 24.02.2021 JP 2021027234
(71) Applicant: Hisamitsu Pharmaceutical Co., Inc., Tosu-shi, Saga 841-0017 (JP)
(72) Inventor: TSURUSHIMA Keiichiro, Tosu-shi, Saga 841-0017 (JP); YAMASOTO Shinji, Tosu-shi, Saga 841-0017 (JP); TATEISHI Tetsuro, Tosu-shi, Saga 841-0017 (JP)
(74) Representative: Grünecker Patent- und Rechtsanwälte PartG mbB
(86) International application number: PCT/JP2022/005670
(87) International publication number: WO 2022/181375

(57) **Abstract**

A packaging bag according to one example includes: a bag body configured to store a plurality of folded patches; an opening formed in the bag body; and a flap label configured to cover the opening such that the opening is capable of being opened and closed. The opening is formed such that Lp/La is 1.5 to 2.5 and Lq/Lb is 1.8 to 2.8, where La denotes a first length of the opening along a first direction, Lp denotes a first length of the folded patch along the first direction, Lb denotes a second length of the opening along a second direction orthogonal to the first direction, the second length being shorter than the first length, and Lq denotes a second length of the folded patch along the second direction.

## Description

### Technical Field

One aspect of the present disclosure relates to a packaging bag configured to enclose a patch therein and relates to a patch packaging product.

### Background Art

Patent Literature 1 describes a packaging bag configured to store a folded poultice. The packaging bag is provided with an opening, and the opening is covered with an adhesive label.

### Citation List

### Patent Literature

Patent Literature 1: Japanese Unexamined Patent Publication No. 2005-231629

### Summary of Invention

### Technical Problem

A packaging bag that enables patches to be easily taken out one by one therefrom is desired.

### Solution to Problem

A packaging bag according to one aspect of the present disclosure includes: a bag body configured to store a plurality of folded patches; an opening formed in the bag body; and a flap label configured to cover the opening such that the opening is capable of being opened and closed. The opening is formed such that Lp/La is 1.5 to 2.5 and Lq/Lb is 1.8 to 2.8, where La denotes a first length of the opening along a first direction, Lp denotes a first length of the folded patch along the first direction, Lb denotes a second length of the opening along a second direction orthogonal to the first direction, the second length being shorter than the first length, and Lq denotes a second length of the folded patch along the second direction.

A patch packaging product according to one aspect of the present disclosure includes: a plurality of folded patches; and a packaging bag configured to store the plurality of folded patches. The packaging bag includes: a bag body; an opening formed in the bag body; and a flap label configured to cover the opening such that the opening is capable of being opened and closed. The opening is formed such that Lp/La is 1.5 to 2.5 and Lq/Lb is 1.8 to 2.8, where La denotes a first length of the opening along a first direction, Lp denotes a first length of the folded patch along the first direction, Lb denotes a second length of the opening along a second direction orthogonal to the first direction, the second length being shorter than the first length, and Lq denotes a second length of the folded patch along the second direction.

In such aspects, the dimensions of the opening are set based on the dimensions of the folded patches, as described above, and thus the patches can be easily taken out one by one from the packaging bag.

### Advantageous Effects of Invention

According to one aspect of the present disclosure, a packaging bag that enables patches to be taken out one by one therefrom can be provided.

### Brief Description of Drawings

FIG. 1 is a perspective view of an example of a patch packaging product in which a packaging bag is closed.
FIG. 2 is a perspective view of an example of the patch packaging product in which the packaging bag is opened.
FIG. 3 is a plan view of the patch packaging product shown in FIG. 1.
FIG. 4 is a perspective view of an example of a patch.
FIG. 5 is a diagram showing an example of the way of folding the patch.
FIG. 6 is a diagram showing an example of a method for storing a plurality of the patches in the packaging bag.
FIG. 7 is a diagram showing a relationship in dimensions between an opening and the folded patches.
FIG. 8 is a diagram showing an example of the configuration of a flap label.

### Description of Embodiments

Hereinafter, an embodiment of the present disclosure will be described with reference to the drawings. In the description of the drawings, the same or equivalent constituents are given the same reference numerals, and duplicate descriptions thereof will be omitted.

### [Configuration of patch packaging product]

A patch packaging product according to the present disclosure is a product traded in a form in which a plurality of folded patches is enclosed in a single packaging bag. The patch is any preparation to be applied to a living body, and examples thereof include poultices, tapes, impregnating materials (such as adhesive plasters), and film preparations. The lower limit of the number of the patches to be enclosed in the single packaging bag may be 3, 5, 7, or 10, and the upper limit thereof may be 30, 25, or 20. In one example, the number of the patches is set in consideration of the stability of an active ingredient of the patches enclosed in the packaging bag and the ease of taking the patches out of the packaging bag. A user can take the required number of the patches one by one out of the packaging bag and apply the patches to a portion desired by the user. In one example, the patches enclosed in the packaging bag are not individually packaged, so that the amount of a packaging material used can be reduced. In this case, it can be said that the patch packaging product is a product capable of reducing or suppressing loads on the environment. The patch packaging product includes a single packaging bag and a plurality of patches. Each of the packaging bag and the patches according to the present disclosure can be traded independently.

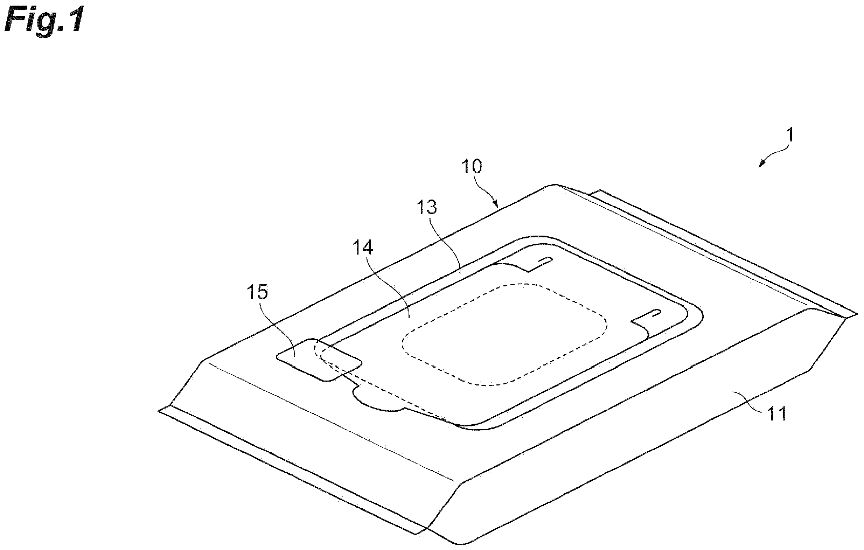

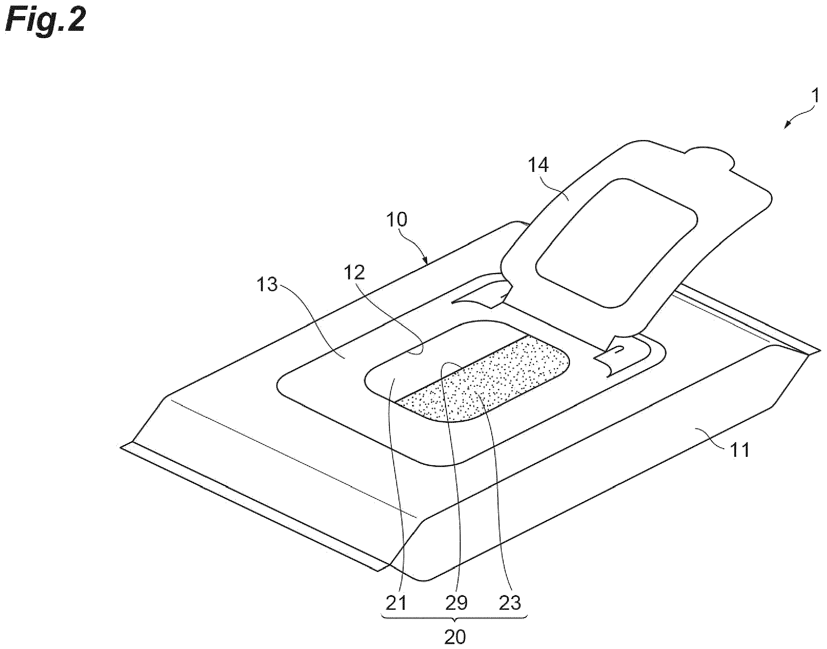

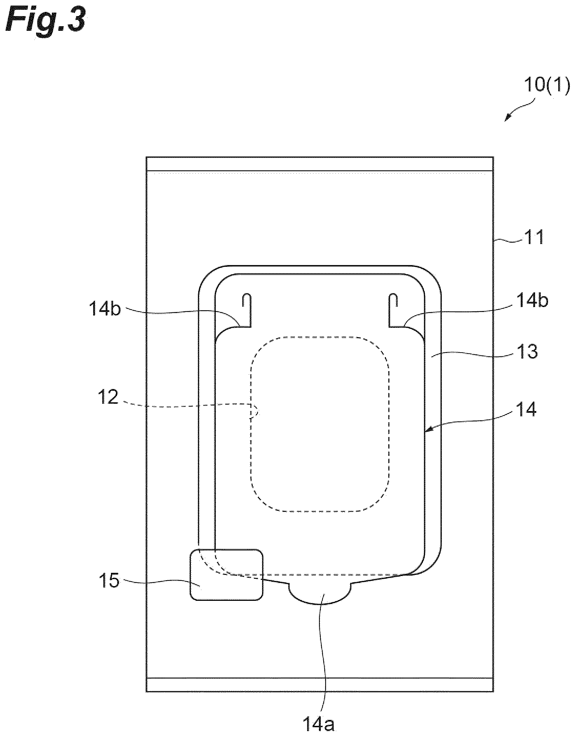

FIG. 1 to FIG. 3 are diagrams showing examples of a patch packaging product 1 and a packaging bag 10 according to the embodiment. FIG. 1 is a perspective view of the patch packaging product 1 in which the packaging bag 10 is closed. FIG. 2 is a perspective view of the patch packaging product 1 in which the packaging bag 10 is opened and accordingly a patch 20 is visible. FIG. 3 is a plan view of the patch packaging product 1 and the packaging bag 10 shown in FIG. 1.

### (Packaging bag)

With reference to FIG. 1 to FIG. 3, the configuration of the packaging bag 10 according to the embodiment will be described. The packaging bag 10 is an object configured to enclose a plurality of the patches 20 therein. In one example, the packaging bag 10 includes: a bag body 11; an opening 12 formed in the bag body 11; a reinforcing label 13 configured to protect the peripheral edge of the opening 12; a flap label 14 configured to function as a lid for closing the opening 12, and a tamper-evident seal 15 provided with respect to the flap label 14. In the present disclosure, a side on which the opening 12 is formed is defined as an upper side of the packaging bag 10, and a side opposite to the upper side is defined as a lower side of the packaging bag 10.

The bag body 11 is a flexible container configured to store the folded patches 20. In one example, the bag body 11 is a laminate including at least: an innermost layer made of, for example, polyethylene terephthalate (PET), polyethylene (PE), polypropylene (PP), cyclic polyolefin (COC), or cyclo-olefin polymer; an oxygen barrier layer provided outside the innermost layer and made of soft metal foil such as aluminum foil, or a vapor deposition layer such as an aluminum vapor deposition layer or a silica-alumina binary vapor deposition layer; and an outer layer provided outside the oxygen barrier layer and made of, for example, PET, PE, PP, cellophane, or paper. The thickness of the outer layer may be 10 to 40 µm, and the thickness of the innermost layer may be 10 to 40 µm. The external shape of the bag body 11 is designed based on the shape and the number of the folded patches 20. In one example, the bag body 11 has a flat shape as a whole, and, when viewed from the upper or lower side, the bag body 11 has a rectangular shape. In one example, ends in the longitudinal direction of the bag body 11 are tapered down toward their respective tips. In one example, the dimensions of the bag body 11 are designed in consideration of the dimensions of the folded patches 20. For example, the short sides of the bag body 11 may be 6 to 15 cm in length and the long sides of the bag body 11 may be 10 to 20 cm in length. The thickness of the bag body 11 may be 5 mm to 80 mm. The bag body 11 may include a linear fastener capable of opening and closing the bag body 11 for storing the patches 20. In this case, it is possible to return the taken-out patches 20 to the bag body 11 or replenish the patches 20.

The opening 12 is formed in the substantially center of the upper surface of the bag body 11. In one example, the opening 12 has a rectangular shape with rounded corners. In one example, a cut is formed in the bag body 11 along the peripheral edge of the opening 12, and the flap label 14 is provided to cover the cut. At the time of opening the flap label 14 first, a portion with the cut is separated from the bag body 11 while the portion is stuck to an adhesive layer of the flap label 14, whereby the opening 12 is formed. In one example, the dimensions of the opening 12 are designed in consideration of the dimensions of the folded patches 20 (in other words, the patches 20 in the state of being stored in the bag body 11). This design will be discussed in detail later.

The reinforcing label 13 is a sheet-shaped member provided on the upper face of the bag body 11 so as to surround the opening 12. In one example, the inner edge of the reinforcing label 13 is designed to match the peripheral edge of the opening 12, and the outer edge of the reinforcing label 13 has a rectangular shape with rounded corners. The reinforcing label 13 includes a sheet-shaped base and an adhesive layer provided on one side of the base so as to bond the reinforcing label 13 to the bag body 11. In one example, the material of the base is a synthetic resin such as PET. Examples of a pressure-sensitive adhesive base contained in the adhesive layer include rubber-based adhesive bases, acrylic-based adhesive bases, silicone-based adhesive bases, and urethane-based adhesive bases. These pressure-sensitive adhesive bases may be used alone or in combination of two or more.

The flap label 14 is a sheet-shaped member provided on the reinforcing label 13. The flap label 14 includes a sheet-shaped base; and an adhesive layer provided on one side of the base so as to bond the flap label 14 to the reinforcing label 13. The material of the base may include a synthetic paper such as YUPO (registered trademark). In one example, a polypropylene (PP) film may be laminated onto the synthetic paper. The PP film may be provided on one side of the synthetic paper and the adhesive layer may be provided on the other side of the synthetic paper. In this case, the PP film is an outermost layer of the flap label 14 and functions as the surface of the flap label 14. The thickness of the PP film may be 20 to 50 µm or 30 to 50 µm. The material of the adhesive layer of the flap label 14 is determined so that the user can open and close the flap label 14 repeatedly. Examples of a pressure-sensitive adhesive base contained in the adhesive layer include, for example, rubber-based adhesive bases, acrylic-based adhesive bases, silicone-based adhesive bases, and urethane-based adhesive bases. These pressure-sensitive adhesive bases may be used alone or in combination of two or more.

In one example, the flap label 14 has an approximately rectangular shape with rounded corners. A part of a first end of the flap label 14 protrudes outward, and this protruding part functions as a tab 14a. In one example, no adhesive layer is provided in the tab 14a. In one example, a pair of cuts 14b are formed inside a second end opposite to the first end. Each of the cuts 14b may have a L-shape (or a reverse L-shape) as a whole. Two ends orthogonal to the first and second ends are referred to as side ends, and the structure of the cuts 14b will be described in detail. Each of the cuts 14b is formed such that the cut 14b runs inside from the corresponding side end of the flap label 14, then bends toward the second end, and finally runs toward the corresponding side end (that is, outward) so as to form a small U-shape.

The user can open the opening 12 by pinching the tab 14a and peeling the flap label 14 toward the second end. By the pair of the cuts 14b, a region of the flap label 14 that is peeled in normal use is limited to a range from the first end to the cuts 14b.

The tamper-evident seal 15 is a seal for preventing the packaging bag 10 from being unnecessarily opened. The tamper-evident seal 15 includes a base and an adhesive layer on one side of the base. The material of the base is, for example, paper. Examples of a pressure-sensitive adhesive base contained in the adhesive layer include, for example, rubber-based adhesive bases, acrylic-based adhesive bases, silicone-based adhesive bases, and urethane-based adhesive bases. These pressure-sensitive adhesive bases may be used alone or in combination of two or more. In one example, the tamper-evident seal 15 has an approximately rectangular shape with rounded corners. The tamper-evident seal 15 has dimensions sufficient to keep the flap label 14 closed. For example, the dimensions are designed so as to cover an area ranging from one corner of the flap label 14 in the vicinity of the tab 14a to a portion of the upper face of the bag body 11.

### (Patch)

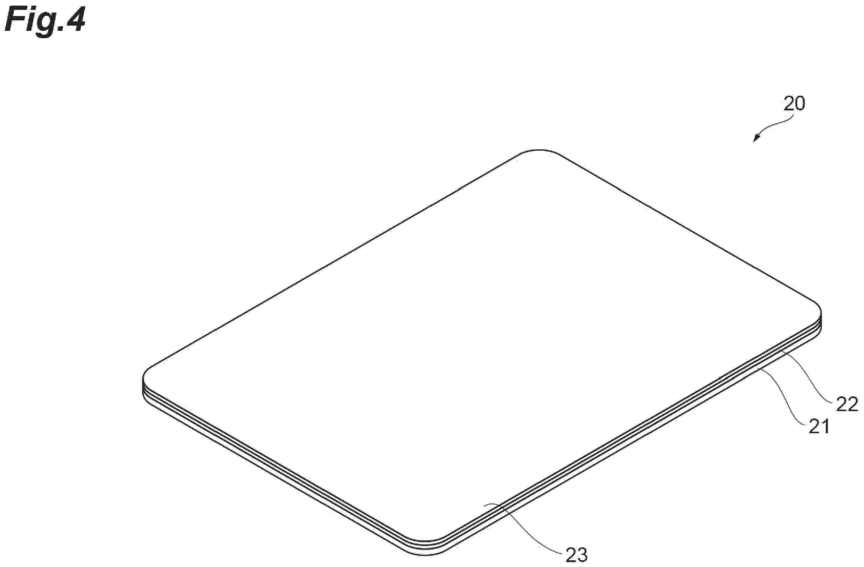

With reference to FIG. 4, the patches 20 stored in the packaging bag 10 will be described. FIG. 4 is a perspective view of an example of the patch 20. In one example, the patch 20 includes: a support 21; an adhesive layer 22 formed on at least a part of one side of the support 21; and a release liner 23 configured to protect the adhesive layer 22. A working surface of the adhesive layer 22 refers to a surface that is in contact with the user's skin during the use of the patch 20. In one example, the patch 20 has a rectangular shape with rounded corners. The patch 20 may have an area of 1 to 300 cm² or 10 to 200 cm². The dimensions (length and width) of the patch 20 may be 10 cm × 14 cm, 7 cm × 10 cm, or 20 cm × 14 cm. In one example, the lower limits of the length and the width of the patch 20 are determined in consideration of a dose of an active ingredient, and the upper limits of the length and the width thereof are determined in consideration of adhesion of the patch 20 to the skin. The thickness of the patch 20 (the sum of the thicknesses of the support 21, the adhesive layer 22, and the release liner 23) may be 100 to 2500 µm, or 800 to 2200 µm.

The support 21 is a sheet-shaped member. The support 21 may be elastic. In one example, the material of the support 21 is selected in consideration of various factors such as physical properties of the support 21 (for example, thickness, stretchability, tensile strength, and ease of application), feel upon application, adhesion to the skin, and infiltration of the active ingredient into the support 21. In one example, the material of the support 21 may be a synthetic resin. Examples of the synthetic resin may include polyolefins such as PE and PP, polyamides such as ethylene-vinyl acetate copolymers, vinyl acetate-vinyl chloride copolymers, polyvinyl chloride, and nylon, polyesters such as PET, polybutylene terephthalate, and polyethylene naphthalate, cellulose derivatives, and polyurethane. Alternatively, the material of the support 21 may be a metal such as aluminum. The material of the support 21 may be, for example, a film, a sheet, a sheet-shaped porous material, a sheet-shaped foam, a fabric (for example, a woven, knitted, or non-woven fabric), foil, or a laminate of these materials. The thickness of the support 21 may be set at 5 to 1500 µm. The reason why the thickness of the support 21 is set at 5 µm or more is to make the handling of the patch 20 easier. The reason why the thickness of the support 21 is set at 1500 µm or less is to prevent the hardness of the support 21 from affecting adhesion. In one example, the thickness of the support 21 may be set at 500 to 1000 µm.

The adhesive layer 22 is a layer that is adhesive enough to adhere to the skin. The adhesive layer 22 may or may not contain an active ingredient. Here, "the adhesive layer contains an active ingredient" refers to a concept that includes both an aspect in which the adhesive layer contains the active ingredient and an aspect in which the active ingredient adheres to the working surface of the adhesive layer. There may be adopted a structure in which the adhesive layer 22 does not contain any active ingredient, but a film, gauze, or the like contains an active ingredient, and the adhesive layer 22 covers an area around the film, gauze, or the like (for example, like the structure of an adhesive plaster). Examples of a pressure-sensitive adhesive base contained in the adhesive layer 22 in a case where the patch is a poultice, a tape, an impregnating material, or a film preparation include rubber-based adhesive bases, acrylic-based adhesive bases, silicone-based adhesive bases, and urethane-based adhesive bases. These pressure-sensitive adhesive bases may be used alone or in combination of two or more. An additive may be contained in the adhesive layer 22 as necessary. Examples of the additive include tackifiers, plasticizers, transdermal absorption promoting agents, solubilizing agents, stabilizing agents, preservatives, UV absorbers, fillers, stabilizers, and fragrances. In one example, the thickness of the adhesive layer 22 may be 30 to 1500 µm (30 to 1500 g/m² mass per unit area), and may be in a range of 300 µm to 1200 µm (300 to 1200 g/m² mass per unit area). The viscosity of the adhesive layer 22 may be in a range of 30000 to 70000 mPa s at 40°C.

The release liner 23 is a sheet-shaped member and is releasably attached to the working surface of the adhesive layer 22. The material of the release liner 23 may be a synthetic resin. Examples of the synthetic resin include polyolefins such as polyethylene and polypropylene, polyamides such as ethylene-vinyl acetate copolymers, vinyl acetate-vinyl chloride copolymers, polyvinyl chloride, and nylon, polyesters such as polyethylene terephthalate, cellulose derivatives, and polyurethane. Alternatively, the material of the release liner 23 may be, for example, aluminum foil or paper. Alternatively, the material of the release liner 23 may be a film formed of a laminate of the above-mentioned materials. A surface of the release liner 23 may be subjected to release treatment such as silicone coating, so that the release liner 23 can be easily peeled off. In one example, the thickness of the release liner 23 may be 10 to 100 µm and may be set in a range of 20 to 40 µm.

### (Enclosing of patch in packaging bag)

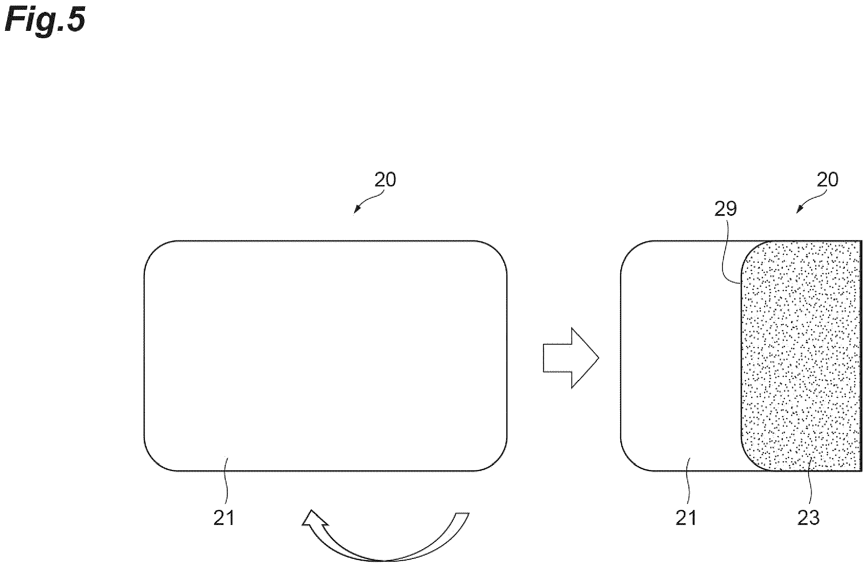

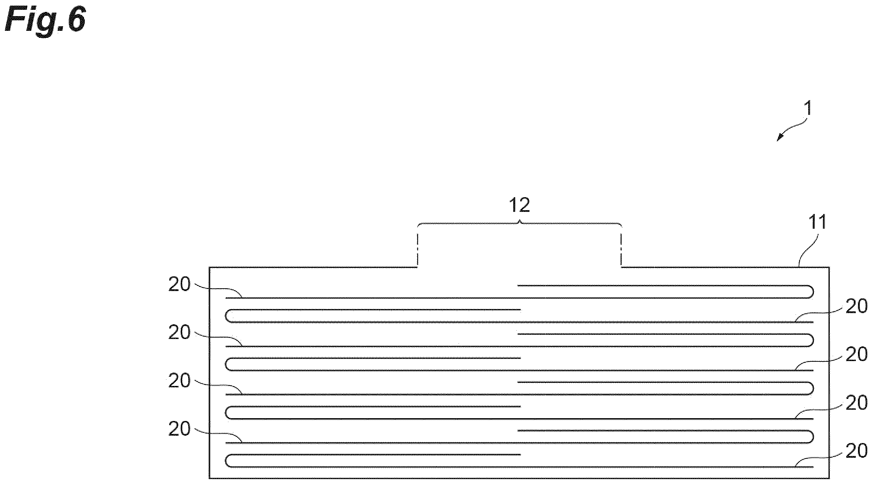

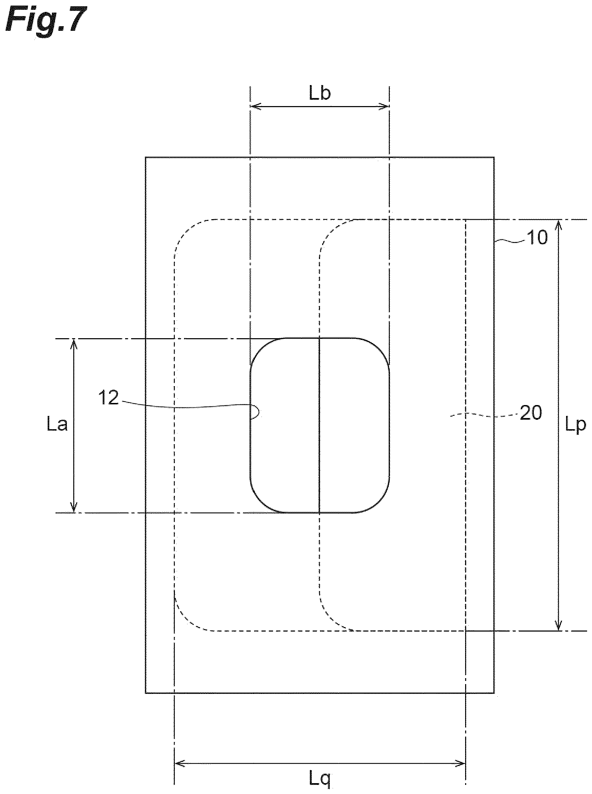

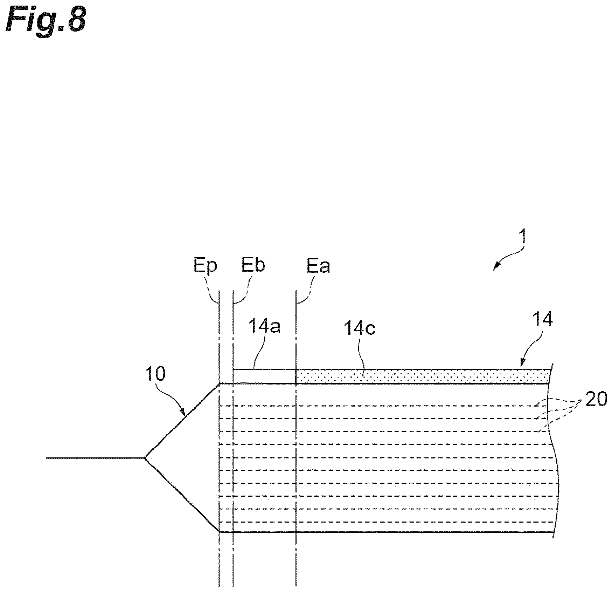

With reference to FIG. 5 to FIG. 8, a configuration related to enclosing the patches 20 in the packaging bag 10 will be described. FIG. 5 is a diagram showing an example of the way of folding the patch 20. FIG. 6 is a diagram showing an example of a method for storing the patches 20 in the packaging bag 10. FIG. 7 is a diagram showing a dimensional relationship between the opening 12 and the folded patches 20. FIG. 8 is a diagram showing an example of the configuration of the flap label 14.

Each of the patches 20 to be stored in the packaging bag 10 is prepared in a form in which a partial region in the longitudinal direction of the patch 20 is folded. As shown in FIG. 5, the patch 20 may be folded with the support 21 inside and the release liner 23 outside. The partial region may account for 1/2 to 1/4 of the patch 20 in the longitudinal direction. In a case where a region accounting for 1/3 of the patch 20 in the longitudinal direction is folded, a first end in the longitudinal direction of the patch 20 is centered in the longitudinal direction. In a case where the patch 20 is stored in the packaging bag 10, the first end can function as a pull end 29 that the user pinches to take the patch 20 out of the packaging bag 10. As shown in FIG. 2, in one example, the patch 20 may be stored in the packaging bag 10 in such a manner that the release liner in the above-mentioned partial region faces the opening 12. In a case where a region accounting for 1/3 of the patch 20 in the longitudinal direction is folded, the pull end 29 can be approximately centered in the opening 12.

As shown in FIG. 6, in one example, each of the plurality of folded patches 20 is stored in the packaging bag 10 in such a manner that the pull end 29 is visible through the opening 12 when the folded patch 20 is seen from above the packaging bag 10. This means that the pull end 29 is positioned inside the peripheral edge of the opening 12. In this example, a region accounting for 1/3 of the patch 20 in the longitudinal direction is folded. In one example, the plurality of folded patches 20 are stacked inside the packaging bag 10 in such a manner that folds appear alternately on the left and right sides along the stacking direction (i.e., the height direction of the packaging bag 10) of the folded patches 20. The respective folded patches 20 are stacked in such a manner that the pull end 29 of each of the plurality of folded patches faces the opening 12 (that is, the pull end 29 is positioned on the upper side).

Depending on the material of the support 21, a possibility arises that the supports 21 easily stick to each other through an interaction such as static electricity or friction, and accordingly, where one of the patches 20 is taken out of the packaging bag 10, another one of the patches 20 immediately below that patch may also come out through the opening 12. In one example, by using the method shown in FIG. 5 and FIG. 6, such a phenomenon can be avoided or suppressed, and as a result, the patches 20 can be securely taken out one by one.

As shown in FIG. 7, in one example, the dimensions of the opening 12 are designed in consideration of the relationship with the dimensions of the folded patches 20 to be stored in the packaging bag 10. The opening 12 has a first length La along a first direction and a second length Lb along a second direction orthogonal to the first direction. In one example, the second length Lb is shorter than the first length La. The folded patches 20 to be stored in the packaging bag 10 each have a first length Lp along the first direction and a second length Lq along the second direction. In one example, the opening 12 is formed such that Lp/La is 1.5 to 2.5 and Lq/Lb is 1.8 to 2.8. Lp/La is a ratio of the first length Lp of the folded patches 20 to the first length La of the opening 12. Lq/Lb is a ratio of the second length Lq of the folded patches 20 to the second length Lb of the opening 12. The lower limit of Lp/La may be 1.5, 1.6, 1.7, 1.8, 1.9, 2.0, 2.1, 2.2, 2.3, or 2.4. The upper limit of Lp/La may be 1.6, 1.7, 1.8, 1.9, 2.0, 2.1, 2.2, 2.3, 2.4, or 2.5. The lower limit of Lq/Lb may be 1.8, 1.9, 2.0, 2.1, 2.2, 2.3, 2.4, 2.5, 2.6, or 2.7. The upper limit of Lq/Lb may be 1.9, 2.0, 2.1, 2.2, 2.3, 2.4, 2.5, 2.6, 2.7, or 2.8.

As indicated by reference lines Ea and Ep in FIG. 8, in one example, an end on the tab 14a side of the adhesive layer of the flap label 14 is positioned inside ends of the folded patches 20 in the packaging bag 10. This means that, when the patch packaging product 1 is seen along the height direction, the end of the adhesive layer is positioned above the folded patches 20. In another example, as indicated by reference lines Eb and Ep in FIG. 8, a tip of the tab 14a may be positioned inside ends of the folded patches 20 in the packaging bag 10. As a matter of course, also in this case, the end on the tab 14a side of the adhesive layer of the flap label 14 is positioned inside ends of the folded patches 20 in the packaging bag 10.

### [Method for using patch packaging product]

One example of a method for using the patch packaging product 1 is as follows. The user pinches the tab 14a of the flap label 14 and peels off the flap label 14 to open the opening 12. Then, the user picks up the pull end 29 of a patch 20 stacked uppermost on the patches 20 in the packaging bag 10 and takes the uppermost patch 20 out of the packaging bag 10. Since the pull end 29 is positioned inside the opening 12, the user can easily take out the uppermost patch 20. The user unfolds the folded patch, peels off the release liner 23, and applies the patch 20 to an application site. The user may take an additional one of the patches 20 out of the packaging bag 10 in the same manner and apply the additional patch 20 to a desired site. The user puts the flap label 14 back on the upper face of the bag body 11 to close the opening 12, whereby the remaining patches 20 are enclosed again in the packaging bag 10.

### [Effects]

As described above, a packaging bag according to one aspect of the present disclosure includes: a bag body configured to store a plurality of folded patches; an opening formed in the bag body; and a flap label configured to cover the opening such that the opening is capable of being opened and closed. The opening is formed such that Lp/La is 1.5 to 2.5 and Lq/Lb is 1.8 to 2.8, where La denotes a first length of the opening along a first direction, Lp denotes a first length of the folded patch along the first direction, Lb denotes a second length of the opening along a second direction orthogonal to the first direction, the second length being shorter than the first length, and Lq denotes a second length of the folded patch along the second direction.

A patch packaging product according to one aspect of the present disclosure includes: a plurality of folded patches; and a packaging bag configured to store the plurality of folded patches. The packaging bag includes: a bag body; an opening formed in the bag body; and a flap label configured to cover the opening such that the opening is capable of being opened and closed. The opening is formed such that Lp/La is 1.5 to 2.5 and Lq/Lb is 1.8 to 2.8, where La denotes a first length of the opening along a first direction, Lp denotes a first length of the folded patch along the first direction, Lb denotes a second length of the opening along a second direction orthogonal to the first direction, the second length being shorter than the first length, and Lq denotes a second length of the folded patch along the second direction.

In such aspects, the dimensions of the opening are set based on the dimensions of the folded patches, as described above, and thus the patches can be easily taken out one by one from the packaging bag.

In the packaging bag according to another aspect, the flap label may include a polypropylene film. By including the polypropylene film in the flap label, which is repeatedly opened and closed, the strength of the flap label is increased, whereby a phenomenon in which the flap label warps can be more securely avoided or suppressed. Therefore, the packaging bag can be securely sealed even after the patch is taken out. This secure sealing contributes to keeping an active ingredient of the patches stable (for example, suppressing volatilization of the active ingredient).

In the packaging bag according to another aspect, the polypropylene film may be the outermost layer of the flap label. By providing the polypropylene film having high strength as the outermost layer of the flap label, a phenomenon in which the repeatedly opened and closed flap label warps can be more securely avoided or suppressed.

In the packaging bag according to another aspect, the flap label may have an adhesive layer provided so as to face the bag body, and a tab provided at one end of the flap label, and an end of the adhesive layer, on a side where the tab is provided, may be positioned inside ends of the folded patches in the bag body. In this case, the adhesive layer on the tab side to be peeled off and attached to open and close the flap label is positioned above the patches in the bag body. Since a surface (the upper surface) of the bag body, which is positioned above the patches, is flat, the adhesive layer near the tab stably sticks to the bag body. Thus, a phenomenon in which the flap label warps and is unintentionally opened is avoided or suppressed, whereby the packaging bag can be securely sealed even after the patch is taken out. This secure sealing contributes to keeping an active ingredient of the patches stable.

In the packaging bag according to another aspect, a tip of the tab may be positioned inside the ends of the folded patches in the bag body. In this case, the tab configured to be operated to open and close the flap label is positioned above the patches in the bag body. Since a surface (the upper surface) of the bag body, which is positioned above the patches, is flat, the adhesive layer of the flap label stably sticks to the bag body. Thus, a phenomenon in which the flap label warps and is unintentionally opened is avoided or suppressed, whereby the packaging bag can be securely sealed even after the patch is taken out. This secure sealing contributes to keeping an active ingredient of the patches stable.

The packaging bag according to another aspect may further include a reinforcing label provided so as to surround the opening. By the reinforcing label, the strength of the end of the opening is increased, whereby the state of the opening can be maintained even after an operation of taking out the patch is repeated. For example, a phenomenon of breakage of the end of the opening can be avoided or suppressed, whereby the packaging bag can be securely sealed even after the patch is taken out. This secure sealing contributes to keeping an active ingredient of the patches stable.

In the patch packaging product according to another aspect, each of the plurality of folded patches may be prepared in a form in which a partial region in a longitudinal direction of the patch is folded, and the plurality of folded patches may be stored in the packaging bag such that an end of the folded patch is visible through the opening. The patches are folded by such simple method and stored in the packaging bag, so that the patches can be easily taken out of the packaging bag.

In the patch packaging product according to another aspect, each of the plurality of folded patches may include a release liner configured to protect an adhesive layer of the patch, and each of the plurality of folded patches may be stored in the packaging bag such that, in the partial region, the release liner faces the opening. In this case, when any two of the adjacent folded patches in the packaging bag are seen, only the release liner of one of the two patches faces the other patch. Therefore, a phenomenon in which, when one of the patches is taken out of the packaging bag, a next lower patch also comes out from the opening can be avoided or suppressed, and as a result, the patches can be securely taken out one by one.

In the patch packaging product according to another aspect, each of the plurality of folded patches may include: a support; an adhesive layer formed on one side of the support; and a release liner configured to protect the adhesive layer, a material of the support may be a fabric and the support may have a thickness of 500 to 1000 µm, and the release liner may have a thickness of 20 to 40 µm. By designing the patches as described above, the patches can be more easily folded and a phenomenon in which the release liner unintentionally comes off from the adhesive layer can be avoided or suppressed.

In the patch packaging product according to another aspect, the plurality of folded patches may be stacked in the packaging bag such that folds appear alternately on left and right sides along a stacking direction of the plurality of folded patches. By such a way of stacking, the thickness of the stacked patches is reduced, whereby the patch packaging product can be reduced in size. In addition, the thickness of the stacked patches is made uniform on the whole, whereby a surface (the upper face) of the bag body, which is positioned above the patches, can be more securely made flat.

### [Modifications]

The present invention was described above in detail, based on the embodiment. However, the present invention is not limited to the above-described embodiment. The present invention can be variously modified without departing from the spirit of the present invention.

The packaging bag according to the present disclosure does not need to include at least one of the reinforcing label and the tamper-evident seal.

### Reference Signs List

1...patch packaging product, 10...packaging bag, 11...bag body, 12...opening, 13...reinforcing label, 14...flap label, 14a...tab, 14b...cut, 15...tamper-evident seal, 20...patch, 21...support, 22...adhesive layer, 23...release liner, 29...pull end.

## Claims

1. A packaging bag, comprising:
a bag body configured to store a plurality of folded patches;
an opening formed in the bag body; and
a flap label configured to cover the opening such that the opening is capable of being opened and closed, wherein
the opening is formed such that Lp/La is 1.5 to 2.5 and Lq/Lb is 1.8 to 2.8, where La denotes a first length of the opening along a first direction, Lp denotes a first length of the folded patch along the first direction, Lb denotes a second length of the opening along a second direction orthogonal to the first direction, the second length being shorter than the first length, and Lq denotes a second length of the folded patch along the second direction.

2. The packaging bag according to claim 1, wherein
the flap label includes a polypropylene film.

3. The packaging bag according to claim 2, wherein
the polypropylene film is an outermost layer of the flap label.

4. The packaging bag according to any one of claims 1 to 3, wherein
the flap label has an adhesive layer provided so as to face the bag body, and a tab provided at one end of the flap label, and
an end of the adhesive layer, on a side where the tab is provided, is positioned inside ends of the folded patches in the bag body.

5. The packaging bag according to claim 4, wherein
a tip of the tab is positioned inside the ends of the folded patches in the bag body.

6. The packaging bag according to any one of claims 1 to 5, further comprising a reinforcing label provided so as to surround the opening.

7. A patch packaging product, comprising:
a plurality of folded patches; and
a packaging bag configured to store the plurality of folded patches, wherein
the packaging bag includes:
a bag body;
an opening formed in the bag body; and
a flap label configured to cover the opening such that the opening is capable of being opened and closed, and
the opening is formed such that Lp/La is 1.5 to 2.5 and Lq/Lb is 1.8 to 2.8, where La denotes a first length of the opening along a first direction, Lp denotes a first length of the folded patch along the first direction, Lb denotes a second length of the opening along a second direction orthogonal to the first direction, the second length being shorter than the first length, and Lq denotes a second length of the folded patch along the second direction.

8. The patch packaging product according to claim 7, wherein
each of the plurality of folded patches is prepared in a form in which a partial region in a longitudinal direction of the patch is folded, and
the plurality of folded patches are stored in the packaging bag such that an end of the folded patch is visible through the opening.

9. The patch packaging product according to claim 8, wherein
each of the plurality of folded patches includes a release liner configured to protect an adhesive layer of the patch, and
each of the plurality of folded patches is stored in the packaging bag such that, in the partial region, the release liner faces the opening.

10. The patch packaging product according to any one of claims 7 to 9, wherein
each of the plurality of folded patches includes:
a support;
an adhesive layer formed on one side of the support; and
a release liner configured to protect the adhesive layer,
a material of the support is a fabric and the support has a thickness of 500 to 1000 µm, and
the release liner has a thickness of 20 to 40 µm.

11. The patch packaging product according to any one of claims 7 to 10, wherein
the plurality of folded patches are stacked in the packaging bag such that folds appear alternately on left and right sides along a stacking direction of the plurality of folded patches.
